# EUROPÄISCHE PATENTSCHRIFT

(11) **EP 2 003 001 B1**
(45) Veröffentlichungstag und Bekanntmachung des Hinweises auf die Patenterteilung: **03.11.2010**
(21) Anmeldenummer: 08006837.2
(22) Anmeldetag: 04.04.2008
(51) Int. Cl.: B60G 15/06, B60G 17/02, F16F 15/02, B66F 17/00

(54) **Abstandskörper zur Durchführung eines Verfahrens zur Nutzung der Stellwege eines aktiven Federbeins eines Kraftfahrzeugs zum Anheben eines Reifens**
Spacer for carrying out a method for using the operating range of an active suspension strut of a motor vehicle for lifting a tyre
Espaceur destinés à l'exécution d'une procédé d'utilisation des parcours de réglage d'une jambe de force active d'un véhicule automobile pour soulever un pneu

(30) Priorität: 15.06.2007 DE 102007027513
(43) Veröffentlichungstag der Anmeldung: 17.12.2008
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 0 290 759
- EP-A- 1 681 189
- WO-A-99/39923
- DE-A1- 10 163 216
- DE-A1- 19 802 702
- DE-A1- 19 840 756
- US-A- 4 216 977

## Beschreibung

Die Erfindung betrifft einen Abstandskörper gemäß der im Anspruch 1 angegebenen Art. Kraftfahrzeuge mit einer aktiven dynamischen Höhenverstellung (Active Body Control), die der dynamischen Regelung der Vertikaldynamik dienen, sind hinreichend bekannt. Hierzu gibt es verschiedene technische Lösungen, wie z.B. hydraulisch/pneumatische, rein hydraulische, sowie reine elektrische Systeme. Es ist zu beobachten, dass die rein elektrischen Systeme (eABC) unweigerlich auf dem Vormarsch sind.

Als Stand der Technik wird beispielhaft auf die DE 10 2005 001 744 B3 verwiesen. Das offenbarte Federbein umfasst im Wesentlichen einen an sich bekannten Schwingungsdämpfer, eine Speicher- und eine Tragfeder sowie einen zwischen der Speicherfeder und der Tragfeder angeordneten, mittels eines elektrischen Aktuators, verstellbaren Federteller. In Ausgangslage, etwa wenn das Fahrzeug leer ist, ist der Federteller ohne Kraftkomponente, d. h. die Tragfeder und die Speicherfeder sind im Gleichgewicht. Mittels des über den elektrischen Aktuator verstellbaren Federtellers ist es nunmehr möglich die dynamischen Kraftkomponenten der Radlaständerung zu stellen. Durch das Vorhandensein der Speicherfeder müssen nicht die vollen Kräfte gestellt werden, als dies der Fall wäre, wenn die Wank- und Nickbewegung allein durch eine Beeinflussung der Tragfeder ausgeglichen werden sollten.

Aus der US 4,216,977 ist eine hydropneumatische Aufhängung für ein Kraftfahrzeug bekannt. Hierzu sind in hydropneumatische Aufhängungseinheiten jeweils automatisch nivellierende Ventile eingebaut, wobei eine Aufhängungseinheit jeweils für eine Radeinheit des Fahrzeugs vorgesehen ist, um hydraulisches Druckmittel den Aufhängungseinheiten zuzuführen oder von diesen abzuleiten, um die Höhe des Fahrzeugrahmens zu regulieren. Die hydropneumatische Aufhängung ermöglicht insbesondere auch ein Anheben des Fahrzeugrahmens in eine Position, sodass Reifenwechsel ermöglicht ist. Für den Reifenwechsel wird dabei zwischen einer Fahrbahnoberfläche und Kraftfahrzeug ein gattungsgemäßer Abstandskörper eingefügt. Zuvor wird das aktive Federbein in Form der hydropneumatischen Aufhängung eines Kraftfahrzeugs derart betätigt, dass das Kraftfahrzeug relativ zu der Fahrbahnoberfläche angehoben wird. Dann wird zwischen der Fahrbahnoberfläche und dem angehobenen Kraftfahrzeug der Abstandskörper eingelegt. Sodann wird das Kraftfahrzeug relativ zur Fahrbahnoberfläche geringfügig abgesenkt, sodass das Kraftfahrzeug auf dem Abstandskörper zum Aufliegen kommt.

Der Erfindung liegt die Aufgabe zugrunde, einen Abstandskörper für ein Verfahren zur Nutzung der Stellwege eines aktiven Federbeins eines Kraftfahrzeugs zum Anheben eines Reifens gemäß der im Oberbegriff des Anspruches 1 angegebenen Art zur Verfügung zu stellen.

Diese Aufgabe wird durch die kennzeichnenden Merkmale des Anspruches 1 gelöst.

Der Erfindung liegt die Erkenntnis zugrunde, dass durch eine gezielte Ausbildung des Abstandskörpers eine Stabilisierung des Fahrzeugs bei Anheben des Kraftfahrzeugs, insbesondere ein Anheben eines Rades im Falle einer Reifenpanne, ermöglicht wird zudem der Abstandskörper auch noch als Aufbewahrungsort von Werkzeug verwendbar ist.

Der Erfindung liegt die Erkenntnis zugrunde, dass durch eine gezielte Verstellung des Federtellers ein derartiges Federbein für weitere Anwendungen, insbesondere ein Anheben eines Rades im Falle einer Reifenpanne, verwendbar ist.

Der Unteranspruch 2 bildet eine vorteilhafte Weiterbildung des erfindungsgemäßen Verfahrens.

Der Erfindung liegt weiterhin die Aufgabe zugrunde, ein Federbein gemäß der im Oberbegriff des Anspruches 3 angegebenen Art derart weiter zu bilden, dass eine einfa-Der Abstandskörper ist als ein quaderförmiges oder zylindrisches Bauteil ausgebildet, wobei mindestens eine Kantenlänge des quaderförmigen Bauteils, respektive die Höhe des Zylinders größer als die Bodenfreiheit des Kraftfahrzeugs ist. Dabei ist Abstandskörper als ein Hohlkörper ausgebildet, und dient der Aufnahme von Bordwerkzeug. Die Abmessungen des quaderförmigen oder zylindrischen Bauteils sind zudem so dimensioniert, dass das Bauteil platzsparend, z.B. in der Felgenschüssel des Reserverades, mitgeführt werden kann.

Vorzugsweise ist der Abstandskörper als ein Strukturschaum hoher Tragfähigkeit, insbesondere als ein Aluminiumwabenstrukturbauteil ausgebildet. Dies hat den Effekt, dass der Körper ein geringes Gewicht aufweist und zugleich die nötige Tragfähigkeit vorhanden ist.

Das Verfahren zur Nutzung der Stellwege eines aktiven Federbeins eines Kraftfahrzeugs zum Anheben eines Reifens benötigt ein an sich bekanntes Federbein mit einer Tragfeder und einer in Reihe zur Tragfeder angeordneten Speicherfeder sowie einen mittels eines Aktuators axial verstellbaren Federteller. In bekannter Art und Weise ist die Tragfeder zwischen einem Führungselement des Reifens und dem Federteller angeordnet, während die Speicherfeder zwischen dem Federteller und einem Fahrzeugaufbau angeordnet ist. Erfindungsgemäß wird zum Anheben eines Reifens, insbesondere im Falle einer Reifenpanne, in einem ersten Schritt der Federteller ausgehend von einer Neutralstellung nach unten in Richtung auf das Führungselement des Reifens verstellt, so dass das Kraftfahrzeug relativ zu einer Fahrbahnoberfläche angehoben wird. In einem zweiten Schritt wird zwischen die Fahrbahnoberfläche und dem angehobenen Kraftfahrzeug ein Abstandskörper eingelegt. Im nachfolgenden dritten Schritt wird der Federteller wieder nach oben in Richtung auf den Fahrzeugaufbau verstellt, so dass das Kraftfahrzeug relativ zur Fahrbahnoberfläche geringfügig abgesenkt wird und nachfolgend das Kraftfahrzeug auf dem Abstandskörper zum Aufliegen kommt. Durch die sich nun wieder entspannende Tragfeder wird der Reifen von der Fahrbahnoberfläche abgehoben.

Auf eine einfache Art und Weise ist es nunmehr durch die erfindungsgemäßen Verfahrensschritte möglich, ein an sich bekanntes Federbein zum Anheben des Fahrzeugs und damit zum Reifenwechsel zu benutzen. Eine Mitführung eines separaten Wagenhebers ist nicht mehr erforderlich. Durch das Vorhandensein der Speicherfeder und die erfindungsgemäße Abfolge der Verfahrensschritte ist zudem in besonders vorteilhafter Weise sichergestellt, dass zum Anheben des Kraftfahrzeuges nicht die gesamte Hubkraft aufgewendet werden muss, als dies der Fall wäre, wenn keine Speicherfeder vorhanden wäre, da die Speicherfeder einen Kraftanteil zur benötigen Hubkraft liefert. Beim letzten Verfahrensschritt, d.h. beim Anheben des defekten Reifens, hilft dann umgekehrt die sich entspannende Tragfeder die Speicherfeder wieder "aufzuziehen".

Vorzugsweise wird die Verstellung des Federtellers vom Cockpit des Kraftfahrzeugs aus gesteuert. Hierdurch ist eine komfortable Bedienung gewährleistet.

Das Federbein zur Durchführung des Verfahrens umfasst in bekannter Art und Weise einen Schwingungsdämpfer, eine Tragfeder und eine in Reihe zur Tragfeder angeordnete Speicherfeder sowie einen mittels eines Aktuators axial verstellbaren Federteller, wobei die Tragfeder zwischen einem Führungselement des Reifens und dem Federteller, und die Speicherfeder zwischen dem Federteller und einem Fahrzeugaufbau angeordnet ist. Erfindungsgemäß ist vorgesehen, dass der Aktuator mit einer Steuer-/Regeleinrichtung in Wirkverbindung steht und die Steuer-/Regeleinrichtung vom Cockpit des Kraftfahrzeugs aus bedienbar ist.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden an Hand des in der Zeichnung dargestellten Ausführungsbeispiels näher beschrieben.

In der Beschreibung, in den Patentansprüchen, in der Zusammenfassung und in der Zeichnung werden die in der unten aufgeführten Liste der Bezugszeichen verwendeten Begriffe und zugeordnete Bezugszeichen verwendet. In der Zeichnung bedeuten:
- Fig. 1: eine schematische Darstellung einer Radauf- hängung eines Kraftfahrzeugs in Neutralstellung mit einem aktiven Federbein,
- Fig. 2: die Radaufhängung aus Fig. 1 nach dem ersten erfindungsgemäßen Verfahrensschritt,
- Fig. 3: die Radaufhängung aus Fig. 1 nach dem zweiten erfindungsgemäßen Verfahrensschritt, und
- Fig. 4: die Radaufhängung aus Fig. 1 nach dem dritten erfindungsgemäßen Verfahrensschritt.

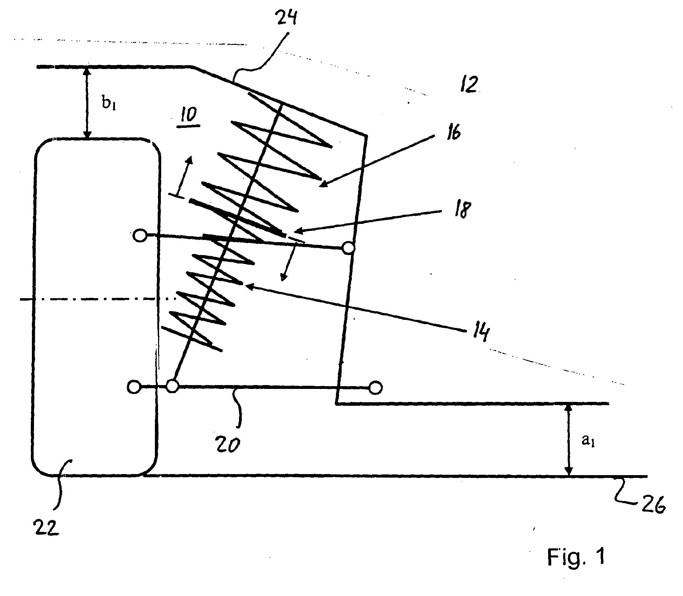

Fig. 1 zeigt in einer schematischen Darstellung eine ein aktives Federbein 10 umfassende Radaufhängung eines Kraftfahrzeugs 12.

Das Federbein 10 umfasst im Wesentlichen eine Tragfeder 14 und eine in Reihe zur Tragfeder 14 angeordnete Speicherfeder 16 sowie einen mittels eines Aktuators axial verstellbaren Federteller 18. Die axiale Verstellbarkeit des Federtellers 18 ist mittels zweier Pfeile schematisch angedeutet. Auf eine Darstellung der weiteren, an sich bekannten Elementen des Federbeins 10 wurde vorliegend aus Gründen der Übersichtlichkeit verzichtet.

Während die Tragfeder 14 zwischen einem Führungselement 20 eines Reifens 22 des Kraftfahrzeuges 12 und dem Federteller 18 angeordnet ist, ist die Speicherfeder 16 zwischen dem Federteller 18 und einem Fahrzeugaufbau 24 angeordnet.

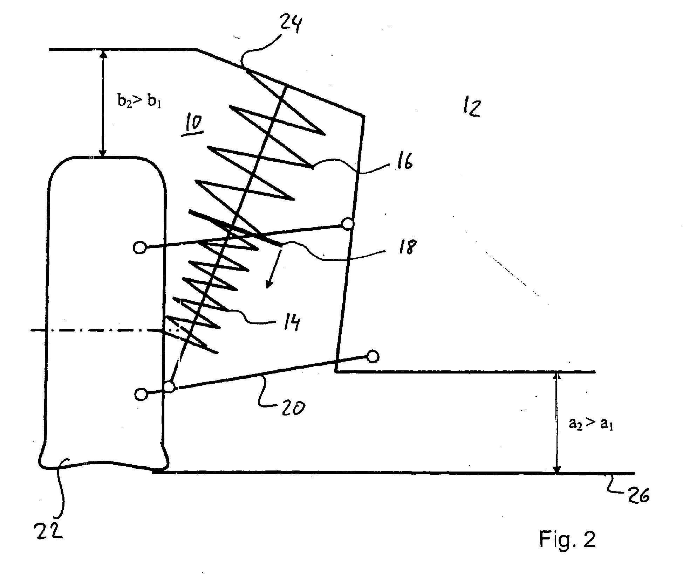

Fig. 2 zeigt die Situation nach einer Reifenpanne. Zur Durchführung des erforderlichen Reifenwechseln sind die nachfolgenden Verfahrensschritte ausgeführt:

Zunächst wird der Federteller 18 nach unten in Richtung auf das Führungselement 20 des Reifens 22 verstellt, so dass das Kraftfahrzeug 12 relativ zu einer Fahrbahnoberfläche 26 angehoben wird. Die Verstellung des Federtellers 18 ist dabei bequem aus dem Cockpit des Kraftfahrzeug 12 initiierbar.

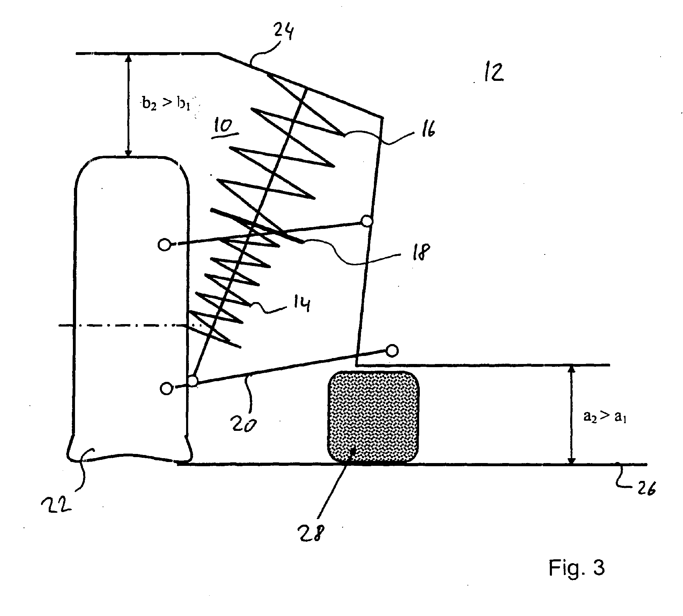

Wie Fig. 3 zu entnehmen ist, wird im nachfolgenden zweiten Schritt zwischen die Fahrbahnoberfläche 26 und dem angehobenen Kraftfahrzeug 12, ein im Kraftfahrzeug 12 mitgeführter Abstandskörper 28 eingelegt. Der Abstandskörper 28 ist als ein quaderförmiges, extrem leichtes und tragfestes Bauteil in Aluwabenstruktur ausgebildet.

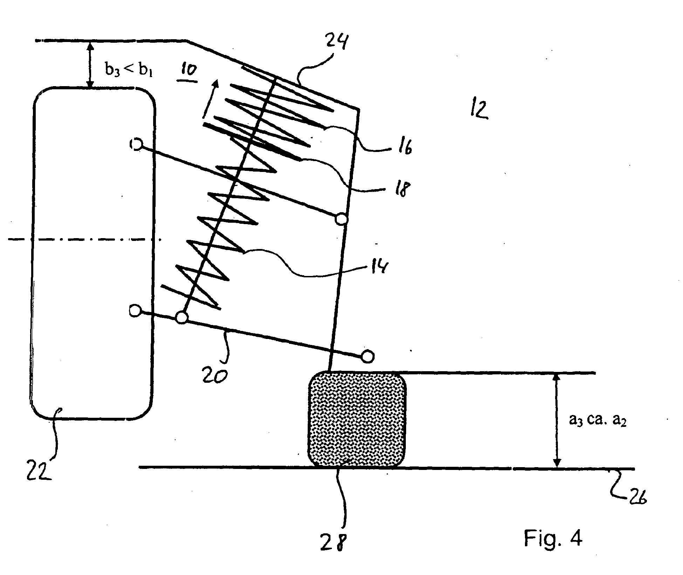

Nach Einlegung des Abstandskörpers 28 wird in einem letzten Schritt der Federteller 18 nach oben in Richtung auf den Fahrzeugaufbau 24 verstellt, vgl. Fig. 4. Hierdurch wird das Kraftfahrzeug relativ zur Fahrbahnoberfläche 26 geringfügig abgesenkt, sodass das Kraftfahrzeug 12 auf dem Abstandskörper 28 zum Aufliegen kommt. Durch die sich nun im weiteren Verlauf wieder entspannende Tragfeder 14 wird der Reifen 22 von der Fahrbahnoberfläche 26 abgehoben.

### BEZUGSZEICHENLISTE

- 10: Federbein
- 12: Kraftfahrzeug
- 14: Tragfeder
- 16: Speicherfeder
- 18: Federteller
- 20: Führungselement
- 22: Reifen
- 24: Fahrzeugaufbau
- 26: Fahrbahnoberfläche
- 28: Abstandskörper

## Patentansprüche

1. Abstandskörper (28) zum Mitführen in einem Kraftfahrzeug (12) zur Durchführung eines Verfahrens zur Nutzung eines aktiven Federbeins (10) eines Kraftfahrzeugs (12) zum Anheben eines Reifens, bei dem das Kraftfahrzeug (12) relativ zu einer Fahrbahnoberfläche (26) angehoben wird, zwischen der Fahrbahnoberfläche (26) und dem angehobenen Kraftfahrzeug (12) der Abstandskörper (28) eingelegt wird, das Kraftfahrzeug (12) relativ zur Fahrbahnoberfläche (26) geringfügig abgesenkt wird und das Kraftfahrzeug (12) auf dem Abstandskörper zum Aufliegen kommt, **dadurch gekennzeichnet, dass** der Abstandskörper (28) als ein quaderförmiges oder zylindrisches Bauteil ausgebildet ist, der Abstandskörper (28) mindestes eine Kantenlänge des quaderförmigen Bauteils oder die Höhe des zylindrisches Bauteils größer als die Bodenfreiheit des Kraftfahrzeugs (12) ist und der Abstandskörper (28) als ein Hohlkörper ausgebildet ist, und der Aufnahme von Bordwerkzeug dient.

2. Abstandskörper nach Patentanspruch 1, **dadurch gekennzeichnet, dass** der Abstandskörper (28) als ein Strukturschaum hoher Tragfähigkeit, insbesondere als ein Aluminiumwabenstrukturbauteil ausgebildet ist.

## Claims

1. Spacer body (28) for carrying in a motor vehicle (12) for carrying out a method for using an active suspension strut (10) of a motor vehicle (12) to lift a tyre, in which method the motor vehicle (12) is raised relative to a roadway surface (26), the spacer body (28) is placed between the roadway surface (26) and the raised motor vehicle (12), the motor vehicle (12) is lowered slightly relative to the roadway surface (26), and the motor vehicle (12) comes to rest on the spacer body, **characterized in that** the spacer body (28) is designed as a cuboidal or cylindrical component, the spacer body (28) is at least one edge length of the cuboidal component or the height of the cylindrical component larger than the ground clearance of the motor vehicle (12), and the spacer body (28) is designed as a hollow body and serves to hold a vehicle tool kit.

2. Spacer body according to Claim 1, **characterized in that** the spacer body (28) is designed as a structured foam with a high load capacity, in particular as an aluminium honeycomb structured component.

## Revendications

1. Corps d'espacement (28) destiné à être entraîné dans un véhicule automobile (12) pour mettre en oeuvre un procédé pour l'utilisation d'une jambe de force active (10) d'un véhicule automobile (12) afin de soulever un pneu, le véhicule automobile (12) étant soulevé par rapport à une surface de la chaussée (26), le corps d'espacement (28) étant introduit entre la surface de la chaussée (26) et le véhicule automobile soulevé (12), le véhicule automobile (12) étant légèrement abaissé par rapport à la surface de la chaussée (26) et le véhicule automobile (12) venant en appui contre le corps d'espacement, **caractérisé en ce que** le corps d'espacement (28) est réalisé sous forme de composant quadrilatéral ou cylindrique, le corps d'espacement (28) est d'une longueur égale à au moins une longueur d'arête du composant quadrilatéral ou la hauteur du composant cylindrique est supérieure à la garde au sol du véhicule automobile (12) et le corps d'espacement (28) est réalisé sous forme de corps creux, et sert à recevoir un outil de bord.

2. Corps d'espacement selon la revendication 1, **caractérisé en ce que** le corps d'espacement (28) est réalisé sous forme de mousse structurelle de grande capacité portante, notamment sous forme de composant structurel en nid d'abeilles en aluminium.
